(19) Europäisches Patentamt
European Patent Office
Office européen des brevets

(11) Numéro de publication: **0 011 038**
**B2**

# (12) NOUVEAU FASCICULE DE BREVET EUROPEEN

(45) Date de publication du nouveau fascicule du brevet: **21.12.83**

(51) Int. Cl.³: **G 01 N 27/56**

(21) Numéro de dépôt: **79400814.4**

(22) Date de dépôt: **31.10.79**

## (54) Capteur électrochimique des concentrations relatives d'espèces réactives dans un mélange fluide, et système comportant un tel capteur, notamment pour la régulation.

(30) Priorité: **07.11.78 FR 7831438**

(43) Date de publication de la demande: **14.05.80 Bulletin 80/10**

(45) Mention de la délivrance du brevet: **10.06.81 Bulletin 81/23**

(45) Mention de la décision concernant l'opposition: **21.12.83 Bulletin 83/51**

(84) Etats contractants désignés: **BE DE GB IT SE**

(56) Documents cités:
**DE - A - 2 416 629**
**DE - A - 2 502 409**
**DE - A - 2 547 683**
**FR - A - 2 051 855**
**US - A - 3 597 345**

(73) Titulaire: **THOMSON-CSF**
**173, Boulevard Haussmann**
**F-75379 Paris Cedex 08 (FR)**

(72) Inventeur: **Croset, Michel**
**"THOMSON-CSF" - SCPI 173, bld Haussmann**
**F-75379 Paris Cedex 08 (FR)**
Inventeur: **Velasco, Gonzalo**
**"THOMSON-CSF" - SCPI 173, bld Haussmann**
**F-75379 Paris Cedex 08 (FR)**

(74) Mandataire: **Lepercque, Jean et al,**
**THOMSON-CSF SCPI 173, Bld Haussmann**
**F-75379 Paris Cedex 08 (FR)**

**EP 0 011 038 B2**

Courier Press, Leamington Spa, England.

Capteur électrochimique des concentrations relatives d'espèces réactives dans un mélange fluide, et système comportant un tel capteur, notamment pour la régulation

L'invention se rapporte aux capteurs électrochimiques de concentrations relatives d'espèces réactives dans un mélange fluide. L'invention concerne en particulier un capteur de pression partielle d'une des espèces contenues dans un gaz.

Une des familles bien connues de capteurs de pression partielle de gaz fonctionne sur le principe de la pile à concentration. Le milieu gazeux à analyser est séparé d'un milieu-référence par une paroi d'électrolyte solide dont chaque face porte une électrode. L'électrolyte solide El est un conducteur ionique exclusif de l'espèce à analyser ou d'un ion susceptible de réagir avec cette espèce. Les électrodes $E_1$, $E_2$ fournissent ou captent les électrons nécessaires aux réactions électrochimiques se produisant aux interfaces.

La figure 1 décrit le principe de fonctionnement d'un capteur de pression partielle d'oxygène basé sur ce principe. La pression partielle d'oxygène $P_1$ du compartiment 1 est connue et sert de référence. Sur les deux électrodes $E_1$, $E_2$ (en platine par exemple) se produisent les réactions:

$$O_2 \rightleftharpoons 2O \quad \underset{+4e-}{\overset{-4e-}{\rightleftharpoons}} 2O^{-2} \qquad [1]$$

A l'équilibre, qui correspond à l'égalisation du potentiel électrochimique de l'oxygène au sein des trois milieux, la tension $\Delta V$ développée aux bornes des électrodes est fournie par la loi de Nernst:

$$\Delta V = \frac{RT}{4F} LN \left(\frac{P_1}{P_2}\right) \qquad [2]$$

avec:

R = Constante des gaz parfaits = 8,314 J/mole.°K)

F = Nombre de Faraday = 96490

T = Température absolue en degrés Kelvin

$P_1$ et $P_2$ = pressions partielles des milieux 1 et 2.

De la connaissance de $P_1$ (référence) et de la mesure de $\Delta V$ et T est déduite la valeur $P_2$.

Dans ce mode de fonctionnement, où le gaz du compartiment 2 est à l'équilibre thermodynamique, le rôle de l'électrode se limite à la catalyse de la réaction d'oxydo réduction:

$$X_n + n.\ \alpha\ e^- \rightleftharpoons n\ X^{\alpha-} \qquad [3]$$

L'électrolyte peut être de la Zircone stabilisée à7 la chaux.

De tels capteurs peuvent aussi être utilisés pour l'analyse de la pression partielle d'un des constituants d'un mélange de gaz hors de l'équilibre thermodynamique. Deux exigences peuvent alors être soulevées, correspondant à deux modes de fonctionnement différents du capteur:

— ou bien le capteur mesure la pression partielle vraie du constituant à analyser, dans son état hors équilibre; dans ce cas, l'électrode ne doit pas modifier notablement la composition, c'est-à-dire qu'elle ne doit pas ou peu catalyser la réaction chimique entre le constituant à analyser et les autres constituants du mélange. Se reportant à la figure 1, cela veut dire que si le compartiment 2 contient un mélange d'oxygène $O_2$ et d'oxyde de carbone CO, la réaction:

$$2CO + O_2 \rightleftharpoons 2\ CO_2$$

doit être évitée. L'électrode ne doit participer qu'à l'équilibrage du potentiel électrochimique de l'un ou l'autre des deux constituants: oxygène ou oxyde de carbone.

— ou bien le capteur mesure la pression partielle qu'aurait l'espèce détectée si le mélange de gaz était parvenu à l'équilibre thermodynamique.

Se reportant à l'exemple précédent cela revient à dire, qu'au moins au niveau de la mesure, c'est-à-dire au niveau de l'interface électrode/électrolyte solide, la réaction de combustion est complète jusqu'à réaliser l'équilibre thermodynamique réversible:

$$2\ CO + O_2 \rightleftharpoons 2\ CO_2 \qquad [4]$$

avec

$$\frac{|CO|\ |O^2|^{1/2}}{|CO^2|} = K(T) \qquad [5]$$

où K(T) est un coefficient d'équilibre dépendant de la température.

L'oxygène ou l'oxyde carbone mesuré correspond alors à l'excès de l'un de ces deux constituants définis par l'équation [4], et $|CO|$, $|O^2|^{1/2}$ et $|CO^2|$ sont les pressions partielles respectivement d'oxyde de carbone, d'oxygène et de gaz carbonique.

Un tel fonctionnement est particulièrement intéressant pour définir, l'écart par rapport à la stoechiométrie d'un mélange.

Dans l'approche de ce problème selon l'art antérieur, certaines solutions ont été proposées qui reposent toutes sur la notion de "prise d'essai". Il est en effet inutile et certaines fois néfaste ou difficile, ou coûteux, de porter la totalité du gaz en état d'équilibre thermo-dynamique; il est plus facile de n'effectuer cet équilibre que sur une petite fraction de ce gaz, renouvelée à la vitesse souhaitée pour tendre vers une analyse en continu. Les solutions consistent à limiter l'échange de gaz entre le milieu

à analyser et l'électrode choisie pour sa haute activité catalytique. On peut citer, parmi d'autres, deux réalisations typiques schématisées par les figures 2 et 3. Sur la figure 2, le capteur est plongé dans une enceinte reliée au milieu extérieur Mex par l'intermédiaire d'un orifice de dimension déterminée Tr. Les échanges de Gaz G entre l'enceinte et le milieu extérieur sont assurés par diffusion gazeuse, celle-ci pouvant être favorisée par des modifications de pression totale du milieu extérieur.

L'activité catalytique de l'électrode $E_2$ doit être suffisante pour que l'équilibre thermodynamique soit rapidement atteint dans l'enceinte (milieu $P_2$), compte-tenu de la cinétique d'échange gazeuse entre enceinte et milieu extérieur Mex. Si tel n'est pas le cas, l'épaisseur de l'électrode $E_2$, au travers de laquelle les gaz diffusent vers l'interface électrode-électrolyte solide $E_I$, doit être choisie de sorte qu'au cours de cette diffusion, la réaction se complète jusqu'à l'équilibre thermodynamique au niveau de l'interface. La figure 3 présente une autre approche du même principe: l'électrode est couverte d'une substance perméable $P_2$ qui limite le flux de gaz vers cette électrode. Dans les deux cas, on mesure la tension développée entre les électrodes $E_1$ et $E_2$. Le milieu $P_1$ est le milieu de référence.

Dans toutes ces solutions, l'électrode $E_2$ est alimentée en gaz dans le sens de son épaisseur. Le principe d'un tel fonctionnement est schématisé d'une façon plus détaillée sur la figure 4. La géométrie à une seule dimension apparaît clairement; en effet, seule la coordonnée Z est un paramètre entrant en jeu dans le fonctionnement, la situation en tout point du plan XY pour une même valeur de l'axe des Z étant équivalente. La surface de l'électrode $E_2$ est alimentée en mélange de gaz au travers d'une impédance schématisée sur la figure 3 par une plaque P percée d'un trou Tr. Au contact de cette surface le gaz n'est en général pas à l'équilibre thermodynamique. L'équilibre doit être atteint au cours de la traversée de l'électrode $E_2$ dans le sens de la coordonnée Z grâce à l'activité catalytique de celle-ci. Les deux paramètres réglant le pouvoir catalytique du système, sont donc les valeurs de l'impédance Tr et de l'épaisseur $\Delta Z$ de l'électrode.

Les inconvénients majeurs d'une telle géométrie sont:

— le prix de l'électrode (en général en métal précieux), proportionnel à son épaisseur;

— la difficulté d'obtenir la catalyse totale avant d'atteindre l'interface électrode-électrolyte, permettant ainsi l'arrivée jusqu'à cette interface des espèces concurentielles, ayant des énergies d'activation d'échange différentes entrainant des dérives en température dans la réponse du capteur.

Des capteurs dans lesquels le fluide à analyser est d'abord catalysé avant d'atteindre la cellule de mesure sont également connus. Ces capteurs comportant deux zones distinctes: une première zone où est disposée un matériau catalyseur et une seconde zone où est disposée la cellule de mesure. De tels capteurs sont décrits dans la demande de brevet FR—A—2 051 855 (WESTING HOUSE ELECTRIC CORPORATION) et le brevet US—A—3 597 345 (W. M. HICKAM et al). Bien que favorisant une meilleure catalyse, ces capteurs de par la structure adoptée se prètent mal à une réalisation aisée notamment sous une forme compacte. Leurs grandes dimensions ne sont pas favorables à de bonnes performances dynamiques.

L'invention propose des structures de capteur du type qui vient d'être décrit dans lesquelles le processus de catalyse est dissocié de la mesure de pression partielle proprement dite et palliant les défauts de l'art connu. Pour ce faire le gaz à analyser doit parcourir un trajet de longueur déterminée dans une enceinte située en amont de la cellule de mesure, c'est à dire la pile $E_1$—$E_1$—$E_2$ telle qu'elle a été décrite dans ce qui précède. La traversée se fait non plus selon l'axe des Z comme indiqué sur la figure 4, mais selon toute direction favorable, et en particulier parallèlement au plan XY. Le gaz est donc canalisé, au moins selon une des coordonnées autre que Z et passe soit près d'une surface de catalyse, soit au sein du volume du catalyseur, le catalyseur étant constitué par la prolongation d'une des électrodes de mesure (suivant la ou les coordonnées autre que Z). Dans ces deux approches, il n'est pas nécessaire de disposer de catalyseur épais. On peut, en plus de l'économie réalisée, utiliser avantageusement les techniques de dépôt en couche mince ou en couche épaisse, utilisées fréquemment dans l'industrie de la microélectronique.

On mesure donc l'écart, par excès ou par défaut, d'une des espèces composant le gaz puisque cette mesure s'effectue en amont du catalyseur, sur un gaz à l'équilibre thermodynamique.

Un tel mode de fonctionnement est particulièrement intéressant pour l'analyse de la composition du gaz brûlé à la sortie d'un moteur à explosion ou d'un brûleur, par exemple de chaudière. On utilise dans ce cas une cellule de mesure dont l'électrolyte est conducteur ionique de l'oxygène, par exemple de la Zircone stabilisée à la chaux. On said en effet que les gaz d'échappement d'un véhicule automobile contiennent, entre autres, du gaz carbonique $CO_2$, de l'oxygène de carbone CO et de l'oxygène $O_2$.

Pour maintenir un régime de moteur préétabli ou pour satisfaire à des normes antipollution, il est nécessaire de réguler, par exemple le mélange air/carburant. Un des moyens connus pour obtenir cette régulation est de placer dans une boucle de rétroaction un capteur d'analyse de pression partielle de l'oxygène contenue dans les gaz d'échappement.

La structure des capteurs selon l'invention,

qui ne mesure que l'écart par rapport à la stoechiométrie est donc particulièrement avantageuse pour une telle application.

L'invention a en conséquence pour objet un capteur électrochimique des concentrations relatives d'espèces réactives contenues dans un mélange fluide, tel que specifié dans la revendication 1 ou 3.

L'invention sera mieux comprise et d'autres avantages apparaîtront à la lecture de la description ci-après en se référant aux dessins annexés parmi lesquels:

— la figure 1 illustre le fonctionnement de la cellule de mesure utilisée dans les capteurs électrochimiques de concentration;

— les figures 2 et 3 sont des schémas de principe de deux capteurs de l'art antérieur;

la figure 4 est un schéma de principe plus détaillé illustrant le fonctionnement d'un capteur de l'art antérieur;

— la figure 5 est un exemple de réalisation d'un capteur selon une première approche conforme à l'invention;

— la figure 6 illustre en perfectionnement technologique applicable au capteur de la figure 5;

— les figures 7 à 9 sont des exemples de réalisation de capteurs selon une seconde approche conforme à l'invention;

— la figure 10 est un jeu de courbes de réponse de capteurs de l'invention;

— la figure 11 est un exemple d'application des capteurs selon l'invention;

— la figure 12 est une vue en coupe illustrant un détail de la figure 11.

Dans ce qui suit, pour illustrer concrètement les exemples de réalisation de capteurs conformes à l'invention, on se placera dans le cas de la mesure de la composition du gaz d'échappement d'un moteur à combustion, c'est-à-dire qu'il sera utilisé une cellule de mesure avec des électrodes en platine et un électrolyte en Zircone stabilisée à la chaux. Un tel choix n'est nullement restrictif de la portée de l'invention. D'autres cellules de mesure peuvent être utilisées, entre autres exemples non limitatifs, on peut utiliser de la silice comme électrolyte pour mesurer la pression partielle de l'hydrogène, et du fluorure de lanthane pour mesurer la pression partielle du fluor.

D'autre part, les conventions et abréviations suivantes seront utilisées en relation avec la description des figures:

— Milieu extérieur: Mex
— Air ambiant ou atmosphère: AAb
— Gaz à analyser: G
— Electrolyte: $E_l$
— Catalyseur: $C_t$
— Pression partielle du milieu de référence: $P_1$
— Pression partielle du gaz à analyseur au niveau de l'électrode de mesure $E_2$: $P_2$
— Matériaux isolants électriques et étanches: $S_1$, $S_2$
— Joints d'étanchéité et de contact électrique: $E_t$
— Différence de potential entre les électrodes de mesure: $\Delta V$
— Orifice calibré de limitation d'échange gazeux avec le milieu extérieur: $T_r$.

La figure 5 illustre un premier exemple de réalisation d'un capteur selon une première approche conforme à l'invention. Le gaz à analyser pénètre par un orifice $T_r$ dans le capteur de mesure de forme allongée. Il parcourt sur une longueur $l_c$ une enceinte dont la paroi est recouverte par une couche mince de catalyseur $C_t$ constitué par le prolongement d'une des électrodes ($E_2$) de la cellule de mesure, c'est-à-dire la pile $E_2$—$E_l$—$E_1$ telle qu'elle a été décrite dans ce qui précède. L'électrode $E_2$ est donc l'électrode en contact avec le gaz à analyser. Le trajet du gaz G effectué selon $l_c$ a été suffisamment long pour que, sous l'influence du catalyseur, il ait atteint l'équilibre thermodynamique. L'électrode $E_1$ est en contact avec le milieu de référence $P_1$, qui peut être l'air ambiant. Deux zones peuvent être distinguées: dans la zone 1 l'électrode $E_2$ est séparée par un matériau isolant $S_1$ inerte constitué par dépôt d'une couche isolante en surface de l'électrolyte solide $E_l$. Dans cette zone, l'électrode sert de catalyseur et catalyse la réaction chimique des gaz hors équilibre qui pénètrent par l'orifice $T_r$. En zone 2, l'électrode $E_2$ est au contact de l'électrolyte solide $E_l$, son action catalytique selon l'axe de coordonnée z n'est plus fondamentale dans la mesure où les gaz ont atteint l'équilibre thermodynamique à la traversée, sur une longueur $L_c$, de la zone 1 et l'épaisseur de cette électrode peut être réduite au minimum. La zone 2 sert d'électrode de mesure de potential avec les autres composants de la cellule $E_1$—$E_l$—$E_2$. Le seul paramètre à ajuster est $l_c$, longueur sur laquelle se fait la catalyse. Il dépend de la dimension de l'orifice $T_r$ d'échange de gaz avec la milieu extérieur qui joue le rôle d'une impédance vis-à-vis du gaz G à analyser et limite les échanges avec le milieu extérieur Mex. La mesure proprement dite se fait en reliant les électrodes $E_1$ et $E_2$ à un système de mesure électrique approprié non représenté. L'ordre de grandeur de la différence de potentiel développée entre ces deux électrodes $\Delta V$ est de l'ordre de quelques centaines de millivolts. Le système de mesure doit posséder une haute impédance d'entrée de façon à limiter le courant traversant la cellule, et par conséquent à limiter la chute de potentiel dûe à la résistance interne de la cellule. Il sera donné ultérieurement des exemples de courbes. de réponse: différence de potentiel en fonction de la différence de pression partielle d'une espèce présente dans les milieux $P_1$ et $P_2$. Le milieu de référence $P_1$ peut être comme il a été indiqué l'air ambiant, mais peut être également tout autre gaz approprié contenu par exemple dans un réservoir. Cet aspect sort du cadre de l'invention.

La figure 6 introduit un perfectionnement supplémentaire applicable au capteur de la figure 5. Il est en effet important que la surface de contact du gaz avec le catalyseur soit la plus extensible possible. On peut donner au dépôt de catalyse une structure propre à augmenter cette surface de contact. La figure 6 illustre un exemple de structure gaufrée répondant à ce critère. Les flèches G montrent le sens de circulation du gaz le long des sillons du catalyseur $C_t$. Cet exemple n'est cependant pas limitatif, on peut utiliser toutes sortes de structures de surface compatibles avec un dépôt en couche mince; rainures, aspérités etc... Ce perfectionnement augmente l'efficacité du catalyseur.

Dans la structure de capteur que vient d'être décrite, la catalyse se fait en "chambre gazeuse". Il faut donc prévoir au sein du capteur une cavité ce qui présente des difficultés d'ordre technologique. On peut obvier ces difficultés en adoptant des structures permettant la catalyse par diffusion au sein d'un solide et qui vont être décrites dans ce qui suit.

La figure 7 présente le cas où la catalyse est assurée non pas par le contact avec un catalyseur déposé en surface, mais par la traversée d'un corps catalyseur poreux ou perméable, ou du moins chargé de catalyseur. Ceci constitue un premier exemple de réalisation selon une seconde approche conforme à l'invention. Selon cette approche la catalyse se fait par diffusion en milieu solide. Le corps catalyseur $c_t$ agit alors aussi comme impédance vis-à-vis des échanges avec le milieu extérieur et il n'est plus besoin d'avoir recours à un orifice calibré ($T_r$ dans la figure 5) pour limiter les échanges entre le milieu extérieur et la cellule de mesure. Il est nécessaire alors d'interdire tout contact direct (selon l'axe de coordonnée Z) entre le milieu extérieur Mex et la partie de l'électrode $E_2$ confondu avec le catalyseur et se trouvant en contact avec l'électrolyte solid $E_l$. Ceci est réalisé par une couche isolante $S_1$ (en matériau non conducteur ionique et non conducteur électronique). Dans la partie 1 de l'électrode $E_2$, sur une longueur $l_c$ se produit la catalyse des gaz réactifs qui atteignent l'équilibre thermodynamique avant ou au contact de la zone 2 ou zone de mesure de l'électrode $E_2$. En conséquence, n'arrive à l'interface active électrode $E_2$-électrolyte $E_1$, que l'espèce en excès par rapport à la stoechiométrie, dans le présent exemple l'Oxygène ou l'oxyde de Carbone.

Sur la figure 7, apparaissent les deux paramètres à ajuster: d'abord $l_c$, longueur de catalyse, dépendant de la géométrie et de la nature de l'électrode $E_2$ dans la zone 1, et de la nature des gaz réactifs. Cette valeur doit être suffisante pour assurer la catalyse complète. Cependant, une trop grande longueur par rapport à cette valeur optimale augmentera inutilement le temps de réponse du capteur et diminuera ses performances en régime dynamique. Le deuxième paramètre $l_\tau$, définit la valeur de la capacité électrique de l'interface électrode-électrolyte. Une valeur trop importante de $l_\tau$ peut également dégrader le temps de réponse du capteur. Comme précédemment les électrodes $E_1$, $E_2$ sont reliées à un système de mesure non représenté.

Le milieu de référence $P_1$ peut être comme dans le cas précédent l'air ambiant ou tout autre gaz approprié. Le milieu $P_2$ qui représente la pression partielle de l'espèce en excès ou en défaut par rapport à la stoechiométrie (par exemple de l'oxygène) est constitué par le volume occupé par l'électrode $E_2$ dans la zone 2, de longueur $l_\tau$. L'enceinte de catalyse est constituée par le volume occupé par l'électrode $E_2$ dans la zone 1, de longueur $l_c$.

Deux autres exemples de réalisation selon la seconde approche sont illustrées par les figures 8 et 9.

La figure 8, plus détaillée, illustre également les différentes étapes A à E nécessaires à la fabrication de capteur. Dans ces deux exemples le capteur se présente essentiellement sous la forme d'une pastille comportant un empilement de disques constitués par les différents composants.

L'élément de base (étape A) est une pastille céramique de sircone stabilisée à la chaux (dopage 12%). Cette pastille est façonnée sous la forme d'un disque de 5 mm de diamètre et de 1 mm d'épaisseur. Ce disque constitue l'électrolyte $E_l$. Une face est couverte annulairement d'un isolant résistant à haute température en émail $S_2$ (étape B) définissant un espace central non couvert de diamètre $l_\tau$. Cet isolant est du type de ceux utilisés en technologie des circuits hydrides, bien connus de l'homme de l'art. Un dépôt de platine (étape C) de 0,1 à quelques dizaines de microns d'épaisseur est alors effectué en face avant sur toute la surface, et en face arrière au centre de la plaquette. Ces dépôts forment les électrodes $E_2$ et $E_1$. Ce dépôt peut être fait par sérigraphie, au pinceau ou par toute autre technique (sous vide par exemple). Au centre de la face avant est alors déposée la deuxième couche d'isolant $S_1$ (étape D) de sorte que celui-ci déborde sur le premier dépôt annulaire sur une distance $l_c$; la partie couverte $l_c$ de l'électrode $E_2$ constitue l'enceinte de catalyse. La pastille est alors pressée par son centre au fond d'un tube métallique (étape E) en contact électrique $C_1$ avec la platine de la face arrière est contact électrique $C_2$ avec la face arrière est assurée par pression. Un joint d'étanchéité $E_t$ en matériau conducteur de l'électricité est disposé entre l'électrode $E_2$ et le tube $C_1$. En fonctionnement, l'intérieur du tube $C_1$ est en contact avec un milieu de référence $P_1$, par exemple l'atmosphère, et la face avant est plongée dans le gaz à analyser G. Pour l'exploitation d'un tel capteur entre 400°C et 1000°C, des valeurs typiques pour $l_\tau$ et $l_c$ sont:

$l_\tau$: 0,1 mm à 2 mm

$l_c$: 0,1 mm à 0,5 mm.

lorsque l'électrode est déposée par sérigraphie sur une épaisseur de 1 μm.

L'électrolyte $E_i$ peut être constitué par un disque de 0,5 mm de diamètre environ (et d'épaisseur 1 mm, comme déjà indiqué).

La figure 9 peut être décrite rapidement. Elle montre une structure analogue à celle de la figure 8. Les élements constitutifs ont des positions essentiellement complémentaires à ceux de la figure 8. En particulier, les électrodes de mesures $E_2$ et $E_1$ sont constituées par un anneau et l'orifice d'entrée du gaz sera au contraire centré. On retrouvera également les éléments déjà décrits sur la figure 8: $S_1$, $S_2$, $E_l$, $C_1$, $C_2$ $E_t$.

Le fonctionnement des capteurs des figures 8 et 9 est identique à celui de la figure 7. L'enceinte de catalyse sur la figure 7 a une configuration essentiellement linéaire (c'est-à-dire suivant une coordonnée: l'axe Y), l'enceinte de catalyse des figures 8 et 9 a une configuration de révolution dans un plan perpendiculaire à l'axe des Z. La réalisation des capteurs selon l'invention n'est cependant pas limitée à ces configurations, les pastilles des figures 8 et 9 peuvent être notamment de forme carrée ou rectangulaire. Dans tous les cas elles seront aisées à réaliser par les techniques des céramiques et par là-même compactes.

De même dans la réalisation d'une cellule de mesure de type pile à concentration on peut utiliser d'autres électrolytes que celui mentionné. On peut notamment utiliser de la thorine ou de l'oxyde ce cerium stabilisés par des éléments, tels que le calcium. l'yttrium ou le scandium, etc... c'est-à-dire un ou plusieurs éléments des colonnes $II_A$ et $III_B$ du tableau périodique. Les électrodes, outre le platine, peuvent être, à titre d'exemple en or ou en argent ou en ailliage à base de ces métaux.

Le catalyseur peut être en platine de texture compacte ou poreuse. Il peut également être constitué par un corps poreux inerte, par exemple de l'alumine ou de la Zircone, chargé de platine ou d'oxydes métalliques tels que: $ZnO$, $Ce\,O_2$, $Mn\,O_2$, $Mn_2\,O_3$, $Fe_2\,O_3$, $CO_2\,O_3$, $Ni\,O$, $Cu\,O$, $Cu_2\,O$, $Cr_2\,O_3$, $Ti\,O_2$, $V_2\,O_5$, $Ag_2\,O$ ou $PbO$. Tous ces oxydes sont connus de l'homme de l'art pour posséder des propriétés catalytiques.

On va maintenant décrire, en se référant aux figures 10 à 12, un exemple d'applisation préférée des capteurs réalisés selon l'invention.

La figure 10 illustre un jeu de courbes de réponse des capteurs de concentration de l'oxygène dans les gaz d'échappement d'un moteur à combustion interne. Chaque courbe représente la différence de potentiel en fonction de la concentration de l'oxygène dans les gaz d'échappement, à température constante. Il est à remarquer trois zones: dans les zones I et III, les différentes courbes sont nettement différenciées les unes des autres. En effet, si on se reporte aux relations [1] et [5] indiquées précédemment, on remarque que ces relations contiennent toutes deux le paramètre "température absolue T". Il est donc difficile d'exploiter ces parties de courbes, car les gaz d'échappement n'ont pas une température constante. Par contre dans la zone il de la figure 12, qui correspond au basculement, les différentes courbes sont pratiquement confondues. Aussi la sortie du capteur est envoyée à un organe de commande électrique qui détecte le basculement rapide de la courbe $\Delta V$ autour du point d'abscisse $\lambda_s$, qui représente le rapport stoechiométrique du mélange, tel qu'il est mesuré au niveau de l'électrode $E_2$.

La figure 11 est un schéma de principe de la régulation du mélange air-carburant d'un moteur à combustion interne 1. Le moteur 1 comporte une admission d'air A et de carburant E qui sont mélangés dans un organe mélangeur 5. Celui-ci peut être un carburateur à cuve, un dispositif d'injection ou tout autre dispositif analogue. Le mélange est amené au moteur 1 par le conduit A/E. L'organe 5 est sous le contrôle d'un organe régulateur 4. La liaison 12 est par un exemple un axe d'accouplement mécanique. Les gaz brûlés sont ensuite éjectés dans l'atmosphère AAb par un tuyau d'échappement $E_c$. Sur le trajet d'éjection des gaz est disposé un capteur 2 conforme à l'invention qui communique avec le gaz d'échappement par le conduit symbolisé par G. En réalité le capteur, comme illustré sur la figure 12 est inséré dans le tuyau d'échappement et maintenu par toutes fixations appropriées f. Le conduit G se réduit à un orifice calibré $T_r$ dans le cas du capteur de la figure 5 ou à l'orifice laissé libre dans l'isolant, pour les capteurs des figures 7 à 9. Le capteur dessiné sur la figure 12 est du même type que celui de la figure 8. On retrouve les contacts $C_1$, $C_2$, l'échange G avec le milieu extérieur Mex et la pastille $C_a$, empilement des différentes couches décrites en relation avec la figure 8. Le signal électrique développé entre les électrodes $E_2$ et $E_1$ de la cellule de mesure est transmis à un dispositif de commande par les liaisons électriques 10 via $C_1$ et $C_2$. Le dispositif de commande doit posséder, comme il a été indiqué précédemment, une forte impédance d'entrée. Il doit être capable de détecter, par exemple à l'aide d'une logique à seuil, le basculement de la courbe $\Delta V$ autor de $\lambda_s$ et sa sortie commande l'organe de régulation 4 par le liaison 11. Le milieu de référence $P_1$ est, dans le cas présent, l'atmosphère AAb.

Cette méthode de régulation est bien connue dans l'électronique automobile, mais il est particulièrement intéressant d'utiliser un capteur conforme à l'invention, dans lequel le gaz à analyser est amené à l'équilibre thermodynamique avant d'atteindre la zone de mesure de l'électrode $E_2$.

D'autre part, cette méthode n'est pas limitée à la régulation du mélange air/carburant d'un moteur à combustion interne. Sans rien changer à la structure de schéma de la figure 11, le moteur 1 peut être remplacé à titre d'exemple non limitatif par les brûleurs d'une chaudière. Le capteur 2 est alors placé dans le circuit $E_c$

d'évacuation des gaz brûlés.

Enfin, bien que pour la clarté de l'explication, seul ait été considéré, pur chaque réalisation, un mélange de gaz à analyser du type oxygène-oxyde de carbone-gaz carbonique, l'utilisation du capteur n'est pas, comme déjà signalé, limité à cette seule analyse. Il suffit d'effecteur un choix approprié de l'électrolyte solide $E_I$ et du milieu de référence $P_1$ pour analyser d'autres mélanges gazeux ou plus généralement d'autres fluides non ionisés.

**Revendications**

1. Capteur électrochimique les concentrations relatives d'espèces réactives contenues dans un mélange fluide (G), constitué par une enceinte formant une zone de catalyse dans laquelle le mélange fluide à analyser est amené à l'équilibre thermodynamique communiquant par un premier orifice ($T_r$) avec ledit mélange fluide à analyser (G) et par un second orifice avec une cellule électrochimique de structure plane sensible à l'excés de l'une des espèces réactives par rapport à la stoechiométrie de la réaction; la cellule comprenant une première électrode ($E_1$) isolée de l'enceinte en contact avec un milieu de référence ($P_1$), une seconde électrode ($E_2$) en contact avec l'enceinte, et un électrolyte solide ($E_I$), conducteur ionique de l'espèce à analyser ou d'un ion susceptible de réagir avec cette espèce, en contact avec les deux électrodes de la cellule électrochimique; capteur caractérisé en ce que l'enceinte se présente sous la forme d'un conduit parallèle sur sa plus grande dimension au plan de la seconde électrode ($E_2$) de la cellule électrochimique, cette seconde électrode ($E_2$) étant réalisée en matériau catalyseur se prolonge par un dépôt sur la paroi inférieure de l'enceinte et est divisée en deux zones; la seconde zone (2) constituant avec la première électrode ($E_1$) et l'electrolyte solide ($E_I$) de la cellule électrochimique une zone de mesure sensible à l'espèce à analyser et une première zone (1) s'étendant sur une distance prédéterminée ($l_c$) du conduit dans la direction de l'orifice de communication ($T_r$) avec le mélange fluide à analyser (G) et constituant ladite zone de catalyse destinée à amener le melange à l'équilibre thermodynamique avant qu'il n'atteigne la zone de mesure et en ce que l'electrolyte ($E_I$) forme un substrat plan sur lequel ont été disposées les première ($E_1$) et seconde ($E_2$) électrodes.

2. Capteur selon la revendication 1, caractérisé en ce que la surface de la première zone de la seconde électrode ($E_2$) est dotée d'une structure gaufrée de façon à augmenter la surface de contact du catalyseur avec le mélange fluide à analyser.

3. Capteur électrochimique des concentrations relatives d'espèces réactives contenues dans un mélange fluide (G), constitué par une enceinte formant une zone de catalyse dans laquelle le mélange fluide à analyser est amené à l'équilibre thermodynamique communiquant par une première extrémité avec ledit mélange fluide à analyser (G) et par une seconde extrémité avec une cellule électrochimique de structure plane sensible à l'excès de l'une des espèces réactives par rapport à la stoechiométrie de la réaction; la cellule comprenant une première électrode ($E_1$) isolée de l'enceinte en contact avec un milieu de référence ($P_1$), une seconde électrode ($E_2$) en contact avec l'enceinte, et un électrolyte solide ($E_I$), conducteur ionique de l'espèce à analyser ou d'un ion susceptible de réagir avec cette espèce, en contact avec les deux électrodes de la cellule électrochimique; capteur caractérisé en ce que l'enceinte se présente sous la forme d'un conduit parallèle sur sa plus grande dimension au plan de la seconde électrode ($E_2$) de la cellule électrochimique, cette seconde électrode ($E_2$) étant réalisée en matériau catalyseur se prolonge dans l'enceinte et est divisée en deux zones; une zone (2) constituant avec la première électrode et l'électrolyte solide ($E_I$) de la cellule électrochimique une zone de mesure sensible à l'espèce à analyser et une autre zone (1) s'étendant sur une distance prédéterminée ($l_c$) du conduit de l'enceinte dans la direction de l'extrémité en communication avec le mélange fluide à analyser (G) et constituant ladite zone de catalyse destinée à amener le mélange à l'équilibre thermodynamique avant qu'il n'atteigne la zone de mesure et en ce que l'enceinte, de faible épaisseur, es entièrement remplie par le matériau catalytique dans la zone de catalyse au sein duquel se déplace le mélange fluide; la zone de mesure étant séparée du mélange fluide à analyser sur sa face supérieure par une couche d'un matériau ($S_1$) étanche et isolant électriquement, et en contact sur sa face inférieure avec l'électrolyte solide; la zone de catalyse (1) étant séparée de l'electrolyte sur sa face inférieure par une autre couche de matériau ($S_2$) étanche et isolant électriquement.

4. Capteur selon la revendication 3, caractérisé en ce que l'enceinte et la cellule électrochimique sont dotées d'une structure de révolution par rapport à un axe perpendiculaire au plan de la première électrode, l'extrémité de l'enceinte un communication avec le mélange fluide à analyser (G) ayant la forme d'un anneau périphérique et la seconde électrode ($E_2$) une forme circulaire centrée par rapport à l'axe de révolution.

5. Capteur selon la revendication 3, caractérisé en ce que l'enceinte et la cellule électrochimique sont dotées d'une structure de révolution par rapport à un axe perpendiculaire au plan de la seconde électrode ($E_2$), cette seconde électrode ayant la forme d'un anneau périphérique, et l'extrémité de l'enceinte en communication avec le mélange fluide à analyser (G) ayant une forme circulaire centrée par rapport à l'axe de révolution.

6. Capteur selon l'une quelconque des revendications 3 à 5, caractérisé en ce que les électrodes ($E_1$, $E_2$) de la cellule électrochimique, et les couches de matériau étanche et isolant électriquement ($S_1$, $S_2$) sont réalisés par la technique de dépôt en couche mince ou de dépôt en couche épaisse.

7. Capteur selon l'une quelconque des revendications 1 à 5, caractérisé en ce que l'électrolyte solide ($E_1$) de la cellule électrochimique, est choisie parmi les matériaux suivants: zircone, thorine, cerine, dopés avec un ou plusieurs éléments des colonnes IIA et IIIB du tableau périodique.

8. Capteur selon l'une quelconque des revendications 1 à 5, caractérisé en ce que la seconde électrode ($E_2$) de la cellule électrochimique est constituée par du platine, de l'argent, de l'or or un alliage à base de ces métaux.

9. Système de régulation du mélange air-carburant pour l'alimentation d'un moteur à combustion interne par analyse électrochimique des gaz d'échappement, caractérisé en ce qu'il comprend un capteur selon l'une quelconque des revendications 1 à 8.

10. Système de régulation du mélange air-carburant pour l'alimentation d'une chaudière par analyse des gaz brulés, caractérisé en ce qu'il comprend un capteur selon l'une quelconque des revendications 1 à 8.

**Claims**

1. An electro chemical captor for the relative concentrations of reactive species contained in a fluid mixture (G), constituted by an enclosure which forms a zone of catalysis in which the fluid mixture to be analysed is brought in thermodynamic equilibrium, said enclosure, communicating by a first orifice ($T_r$) with the fluid mixture to be analysed (G) and by a second orifice with an electro chemical cell of flat structure sensitive to an excess of one of the reactive species by reference to the stoichiometry of the reaction; the cell comprising a first electrode ($E_1$) isolated from the enclosure in contact with a reference medium ($P_1$), a second electrode ($E_2$) in contact with the enclosure, and a solid electrolyte ($E_1$), an ionic conductor for the species to be analysed or for an ion capable of reaction with this species, in contact with the two electrodes of the electro chemical cell; the captor being characterised in that the enclosure is in the form of a conduit parallel in its greatest dimension to the plane of the second electrode ($E_2$) of the electro chemical cell, this second electrode ($E_2$), being formed in catalyst material extending through a deposit on the lower wall of the enclosure and being divided into two zones, the second zone (2) constituting with the first electrode ($E_1$) and the solid electrolyte ($E_1$) of the electro chemical cell a measuring zone sensitive to the species to be analysed and a first zone (1) extending a predetermined distance ($l_c$) of the conduit in the direction of the communication orifice ($T_r$) with the fluid mixture to be analysed (G) and constituting said zone of catalysis bringing the mixture in thermodynamic equilibrium before it reaches the measuring zone and so that the electrolyte ($E_1$) forms a flat substrate on which have been arranged the first ($E_1$) and second ($E_2$) electrodes.

2. A captor according to claim 1, characterised in that the surface of the first zone of the second electrode ($E_2$) is given an embossed structure in order to increase the contact surface of the catalyst with the fluid mixture to be analysed.

3. An electro chemical captor for the relative concentrations of reactive species contained in a fluid mixture (G), constituted by an enclosure which forms a zone of catalysis in which the fluid mixture to be analysed is brought in thermodynamic equilibrium, said enclosure communicating by a first extremity with the fluid mixture to be analysed (G) and by a second extremity with an electro chemical cell of flat structure sensitive to an excess of one of the reactive species in relation to the stoichiometry of the reaction; the cell comprising a first electrode ($E_1$) isolated from the enclosure in contact with a reference medium ($P_1$), a second electrode ($E_2$) in contact with the enclosure, and a solid electrode ($E_1$), an ionic conductor for the species to be analysed or for an ion capable of reacting with this species, in contact with the two electrodes of the electro chemical cell; the captor being characterised in that the enclosure is in the form of a conduit parallel in its greatest dimension to the plane of the second electrode ($E_2$) of the electro chemical cell, this second electrode ($E_2$) being formed in catalyst material extending into the enclosure and being divided into two zones; a zone (2) constituting with the first electrode and the solid electrolyte ($E_1$) of the electro chemical cell a measuring zone sensitive to the species to be analysed and another zone (1) extending a predetermined distance ($l_c$) of the conduit of the enclosure in the direction of the extremity in communication with the fluid mixture to an analysed (G) and constituting said zone of catalysis for conducting the mixture in thermodynamic equilibrium before it reaches the measuring zone and so that the enclosure, of slight thickness, is entirely filled by the catalyst material in the zone of catalysis in which the fluid mixture is displaced; the measuring zone being separated from the fluid mixture to be analysed on its upper face by a coating of an impervious and electrically isolating material ($S_1$) and in contact on its lower face with the solid electrolyte; the zone of catalysis being separated from the electrolyte on its lower face by another coating of an impervious and electrically isolating material ($S_2$).

4. A captor according to claim 3, characterised in that the enclosure and the electro chemical cell are given a structure of revolution in relation to an axis perpendicular to the plane

of the first electrode, the extremity of the enclosure in communication with the fluid mixture to be analysed (G) having the form of a peripheral ring and the second electrode ($E_2$) a circular form centred in relation to the axis of revolution.

5. A captor according to claim 3, characterised in that the enclosure and the electro chemical cell are given a structure of revolution in relation to an axis perpendicular to the plan of the second electrode ($E_2$), this second electrode having the shape of a peripheral ring, and the extremity of the enclosure in communication with the fluid mixture to be analysed (G) having a circular form centred in relation to the axis of revolution.

6. A captor according to any of claims 3 to 5, characterised in that the electrodes ($E_1$, $E_2$) of the electro chemical cell, and the coating of insulating and electrically isolating material ($S_1$, $S_2$) are formed by the technique of applying a thin coating or a thick coating.

7. A captor according to any of claims 1 to 5, characterised in that the solid electrolyte ($E_1$) of the electro chemical cell, is chosen among the following materials; zirconia, thoria, ceria, doped with one or several elements of groups IIA and IIIB of the periodic table.

8. A captor according to any of claims 1 to 5, characterised in that the second electrode ($E_2$) of the electro chemical cell is constituted by platinum, silver, gold or an alloy based on these metals.

9. A system for the regulation of the air-fuel mixture for feeding an internal combustion engine by electro chemical analysis of the exhaust gas, characterised in that it comprises a captor according to any of claims 1 to 8.

10. A system for the regulation of the air-fuel mixture for feeding a boiler by analysis of the burnt gas, characterised in that it comprises a captor according to any of claims 1 to 8.

**Patentansprüche**

1. Elektrochemischer Meßfühler für relative Konzentrationen reaktiver Spezies, die in einem Fluidgemisch (G) enthalten sind, bestehend aus einer Kammer, die eine Katalysezone bildet, in der das zu analysierende Fluidgemisch in das thermodynamische Gleichgewicht gebracht wird, wobei diese Kammer mittels einer ersten Öffnung ($T_r$) mit dem zu analysierenden Fluidgemisch (G) und durch eine zweite Öffnung mit einer elektrochemischen Zelle von ebener Bauweise, welche für den Überschuß einer der reaktiven Spezies bezüglich der Stöchiometrie der Reaktion empfindlich ist, in Verbindung steht, wobei die Zelle eine erste Elektrode ($E_1$), die gegenüber der Kammer isoliert ist und mit einem Bezugsmilieu ($P_1$) in Kontakt steht, eine zweite Elektrode ($E_2$), welche mit der Kammer in Kontakt steht, und einen festen Electrolyten ($E_1$), der ein Ionenleiter der zu analysierenden Spezies oder eines Ions, das mit dieser Spezies reagieren kann, ist und mit den beiden Elektroden der elektrochemischen Zelle in Kontakt ist, aufweist, wobei der elektrochemische Meßfühler dadurch gekennzeichnet ist, daß die Kammer die Form eines Kanals aufweist, dessen größte Abmessung zur Ebene der zweiten Elektrode ($E_2$) der elektrochemischen Zelle parallel ist, daß diese zweite Elektrode ($E_2$) aus einem Katalysatormaterial hergestellt ist, sich durch eine Abscheidung auf der Innenwand der Kammer fortsetzt und in zwei Zonen unterteilt ist, wobei die zweite Zone (2) mit der ersten Elektrode ($E_1$) und dem festen Elektrolyten ($E_1$) der elektrochemischen Zelle eine für die zu analysierende Spezies empfindliche Meßzone bildet und eine erste Zone (1) sich über eine vorbestimmte Strecke ($l_c$) des Kanals in der Richtung der Verbindungsöffnung ($T_r$) mit dem zu analysierenden Fluidgemisch (G) erstreckt und die Katalysezone bildet, wo das Gemisch in das thermodynamische Gleichgewicht gebracht wird, bevor es die Meßzone erreicht, und daß der Elektrolyt ($E_1$) ein ebenes Substrat bildet, aud dem die erste ($E_1$) und zweite ($E_2$) Elektrode angeordnet sind.

2. Meßfühler nach Anspruch 1, dadurch gekennzeichnet, daß die Oberfläche der ersten Zone der zweiten Elektrode ($E_2$) mit einer Reliefstruktur versehen ist, welche die Berührungsfläche des Katalysators mit dem zu analysierenden Gasgemisch vergrößert.

3. Elektrochemischer Meßfühler für relative Konzentrationen von reaktiven Spezies, die in einem Fluidgemisch (G, enthalten sind, bestehend aus einem umgrenzten Bereich, der eine Katalysezone bildet, in der das zu analysierende Fluidgemisch in das thermodynamische Gleichgewicht gebracht wird, wobei der bereich durch ein erstes Ende mit dem zu analysierenden Fluidgemisch (G) und durch ein zweites Ende mit einer elektrochemischen Zelle von im wesentlichen ebener Bauweise, die für den bezüglich der Stöchiometrie der Reaktion vorhandenen Überschuß der einen der reaktiven Spezies empfindlich ist, in Verbindung steht, wobei die Meßzelle eine erste Elektrode ($E_1$), die gegenüber dem Bereich isoliert und mit einem Bezugsmilieu ($P_1$) in Kontakt ist, eine zweite Elektrode ($E_2$), die in Kontakt mit dem Bereich ist, und einen festen Elektrolyten ($E_1$), der ein Ionenleiter der zu analysierenden Spezies oder eines Ions, das mit dieser Spezies reagieren kann, ist und mit dem beiden Elektroden der elektrochemischen Zelle in Kontakt ist, aufweist, wobei der Meßfühler dadurch gekennzeichnet ist, daß der umgrenzte Bereich die Form einer in ihrer größten Abmessung zur Ebene der zweiten Elektrode ($E_2$), der elektrochemischen Zelle parallelen Leitung hat, die zweite Elektrode ($E_2$) aus einem Katalysatormaterial hergestellt ist und sich in den Bereich fortsetzt und in zwei Zonen unterteilt ist; eine Zone (2), die mit der ersten Elektrode ($E_1$) und dem festen Elektrolyten ($E_1$) der elektrochemischen Zelle eine für die zu analysierende Spezies enpfindliche

Meßzone bildet, und eine andere Zone (1), die sich über eine vorbestimmte Strecke ($l_c$) der Leitung des Bereichs in Richtung des mit dem zu analysierenden Fluidgemisch (G) in Berührung stehenden Endes erstreckt und die katalysezone bildet, in der das Gemisch in das thermodynamische Gleichgewicht gebracht wird, bevor es die Meßzone erreicht, und wobei der eine geringe Dicke aufweisende Bereich in der Katalysezone vollständig vom Katalysatormaterial ausgefüllt wird, in dem sich das Fluidgemisch verschiebt, und wobei ferner die Meßzone (2) von dem zu analysierenden Fluidgemisch an ihrer Oberseite durch eine Schicht ($S_1$) aus einem dichten und elektrisch isolierenden Material getrennt und an ihrer Unterseite mit dem festen Elektrolyten in Kontakt ist und die Katalysezone (1) an ihrer Unterseite durch eine andere Schicht ($S_2$) aus dichtem und elektrisch isolierenden Material vom Elektrolyten getrennt ist.

4. Meßfühler nach Anspruch 3, dadurch gekennzeichnet, daß der umgrenzte Bereich und die elektrochemische Zelle einen drehsymmetrischen Aufbau bezüglich einer zur Ebene der ersten Elektrode ($E_1$) senkrechten Achse haben, wobei das mit dem zu analysierenden Fluidgemisch (G) in Verbindung stehende Ende des Bereiches die Form eines am Rand liegenden Ringes und die zweite Elektrode ($E_2$) eine bezüglich der Drehachse zentrierte Kreisform aufweisen.

5. Meßfühler nach Anspruch 3, dadurch gekennzeichnet, daß der umgrenzte Bereich und die elektrochemische Zelle einen drehsymmetrischen Aufbau bezüglich einer zur Ebene der zweiten Elektrode ($E_2$) senkrechten Achse aufweisen, wobei diese zweite Elektrode die Form eines am Rand liegenden Ringes und das Ende des mit dem zu analysierenden Fluidgemisch (G) in Verbindung stehenden Bereiches eine bezüglich der Drehachse zentrierte Kreisform aufweisen.

6. Meßfühler nach einem der Ansprüche 3 bis 5, dadurch gekennzeichnet, daß die Elektroden ($E_1$, $E_2$) der elektrochemischen Zelle und die Schichten ($S_1$, $S_2$) aus dichtem und elektrisch isolierenden Material durch die Methode der Dünnschichtabscheidung oder der Dickschichtabscheidung hergestellt sind.

7. Meßfühler nach einem der Ansprüche 1 bis 5, dadurch gekennzeichnet, daß der feste Elektrolyt ($E_1$) der elektrochemischen Zelle ausgewählt ist aus den folgenden Materialien: Zirconiumoxid, Thoriumoxid, Ceroxid, die gegebenenfalls mit einem oder mehreren Elementen der Gruppen IIA und IIIB des periodischen Systems dotiert sind.

8. Meßfühler nach einem der Ansprüche 1 bis 5, dadurch gekennzeichnet, daß die zweite Elektrode ($E_2$) der elektrochemischen Zelle aus Platin, Silber, Gold oder einer Legierung auf der Basis dieser Metalle besteht.

9. System zur Regelung des Luft-Treibstoffgemisches zur Speisung einer Brennkraftmaschine durch elektrochemische Analyse der Abgase, dadurch gekennzeichnet, daß es einen Meßfühler nach einem der Ansprüche 1 bis 8 enthält.

10. System zur Regulierung des Luft-Treibstoffgemisches zur Speisung einer Kesselfeuerung durch Analyse der Abgase, dadurch gekennzeichnet, daß sie einen Meßfühler nach einem der Ansprüche 1 bis 8 enthält.

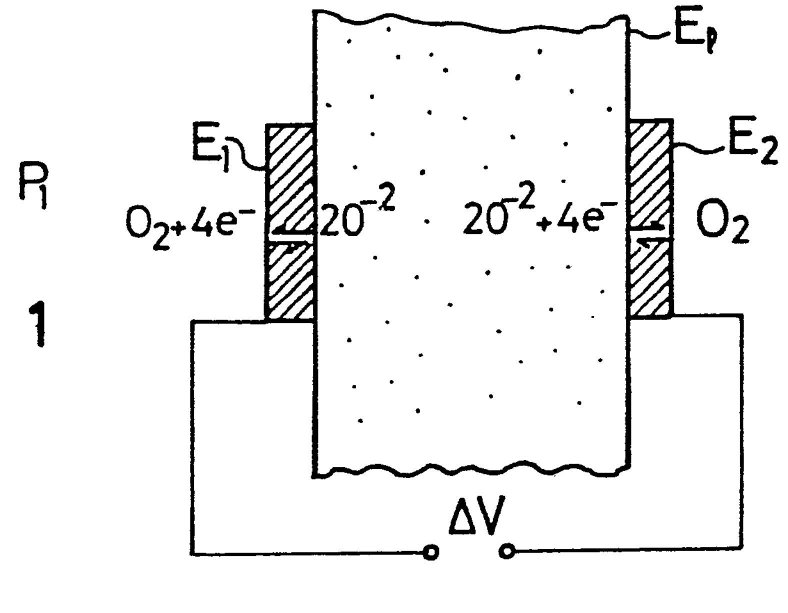


Fig. 1

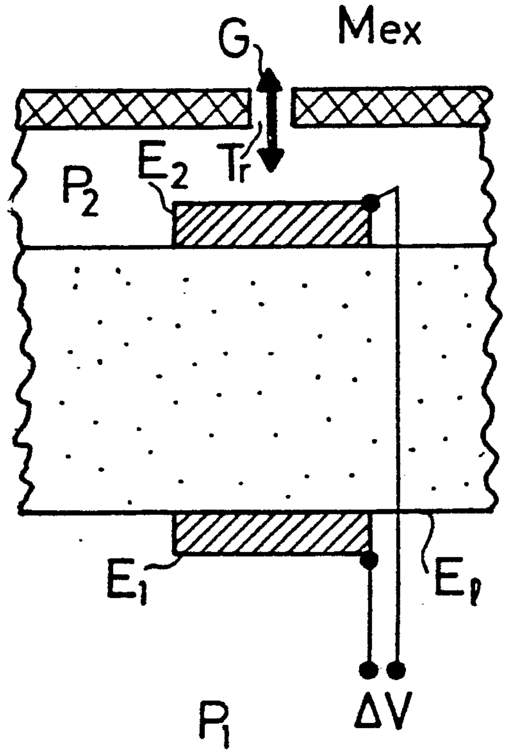


Fig. 2

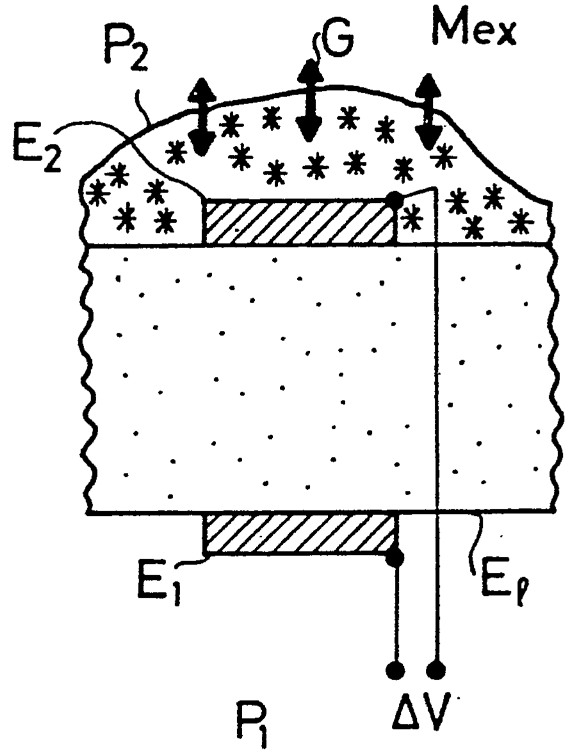


Fig. 3

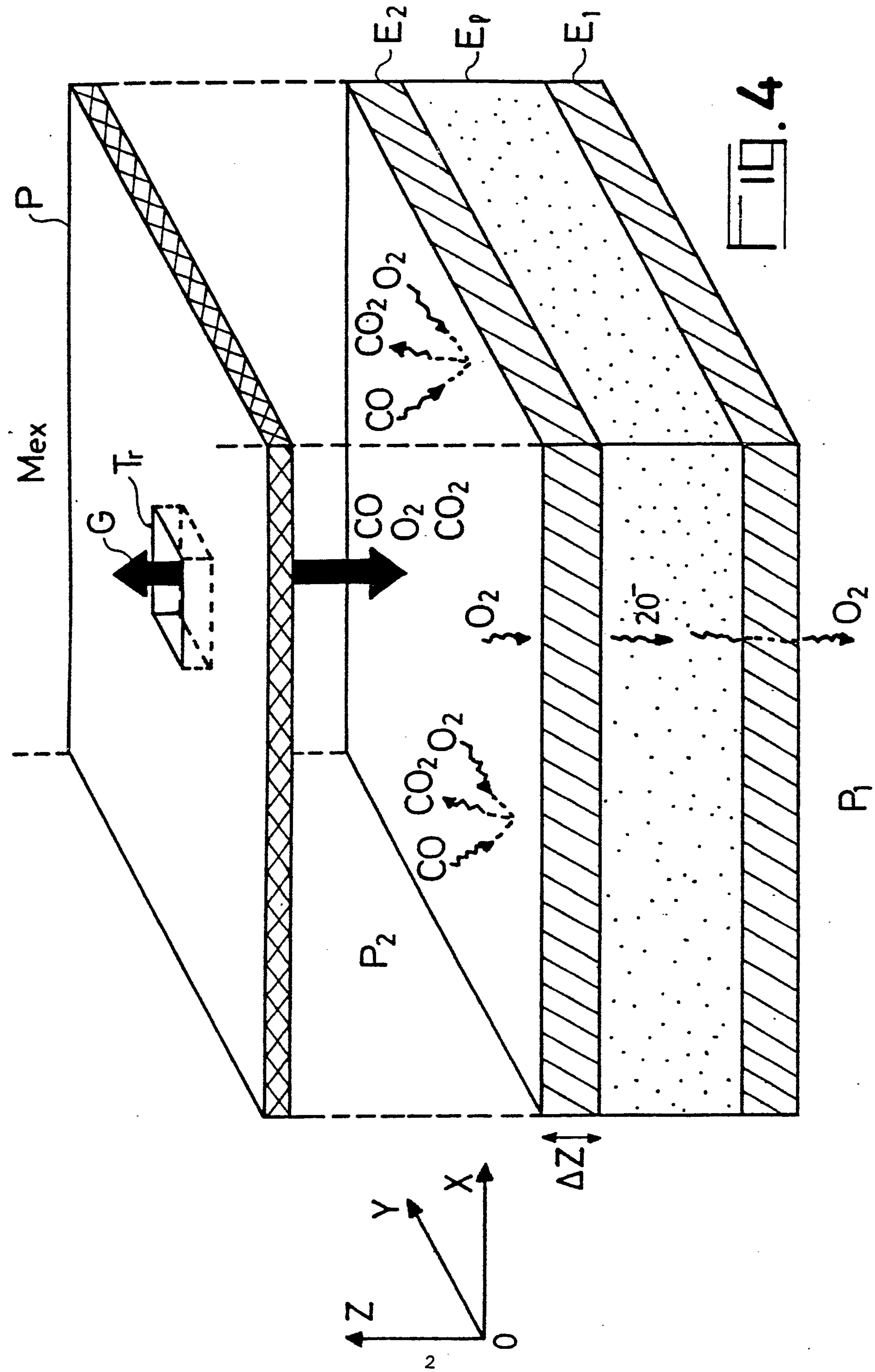


FIG. 4

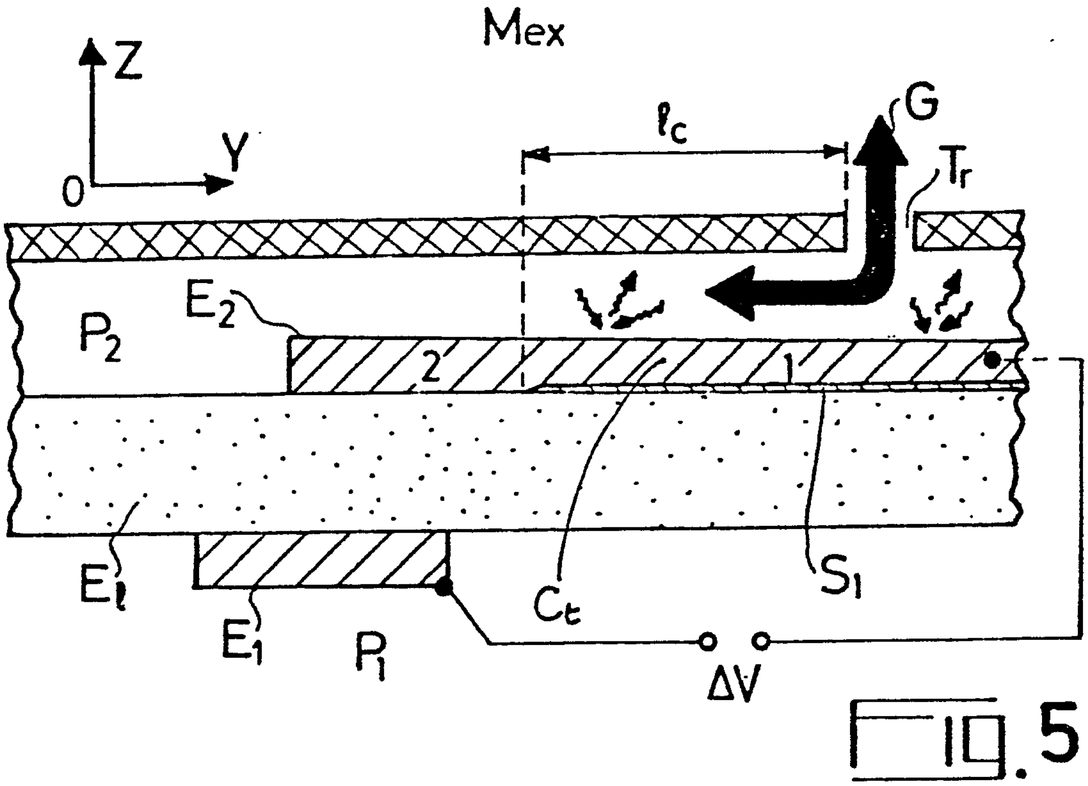


Fig.5

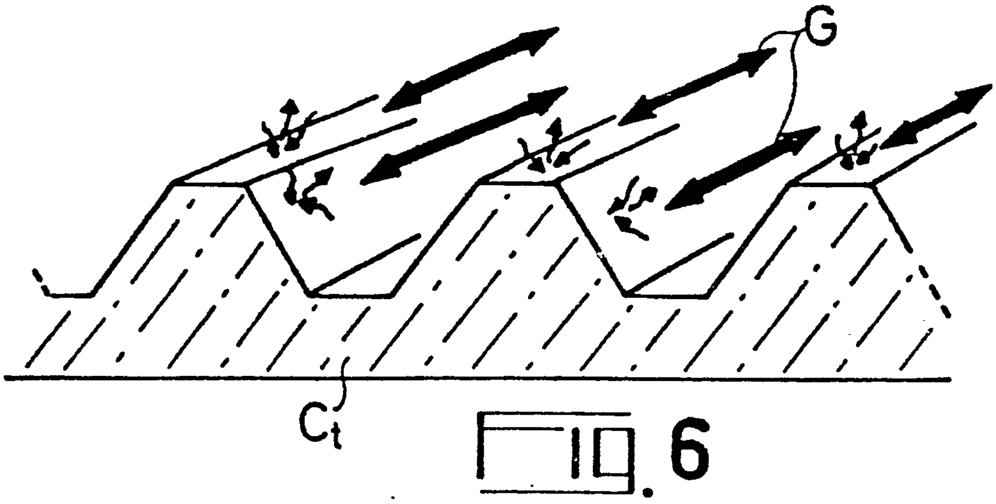


Fig. 6

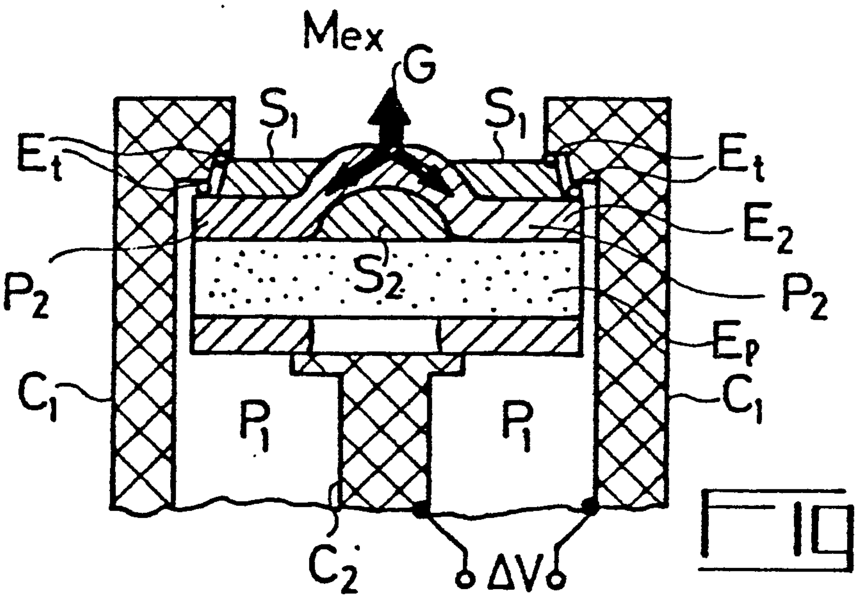


Fig. 9

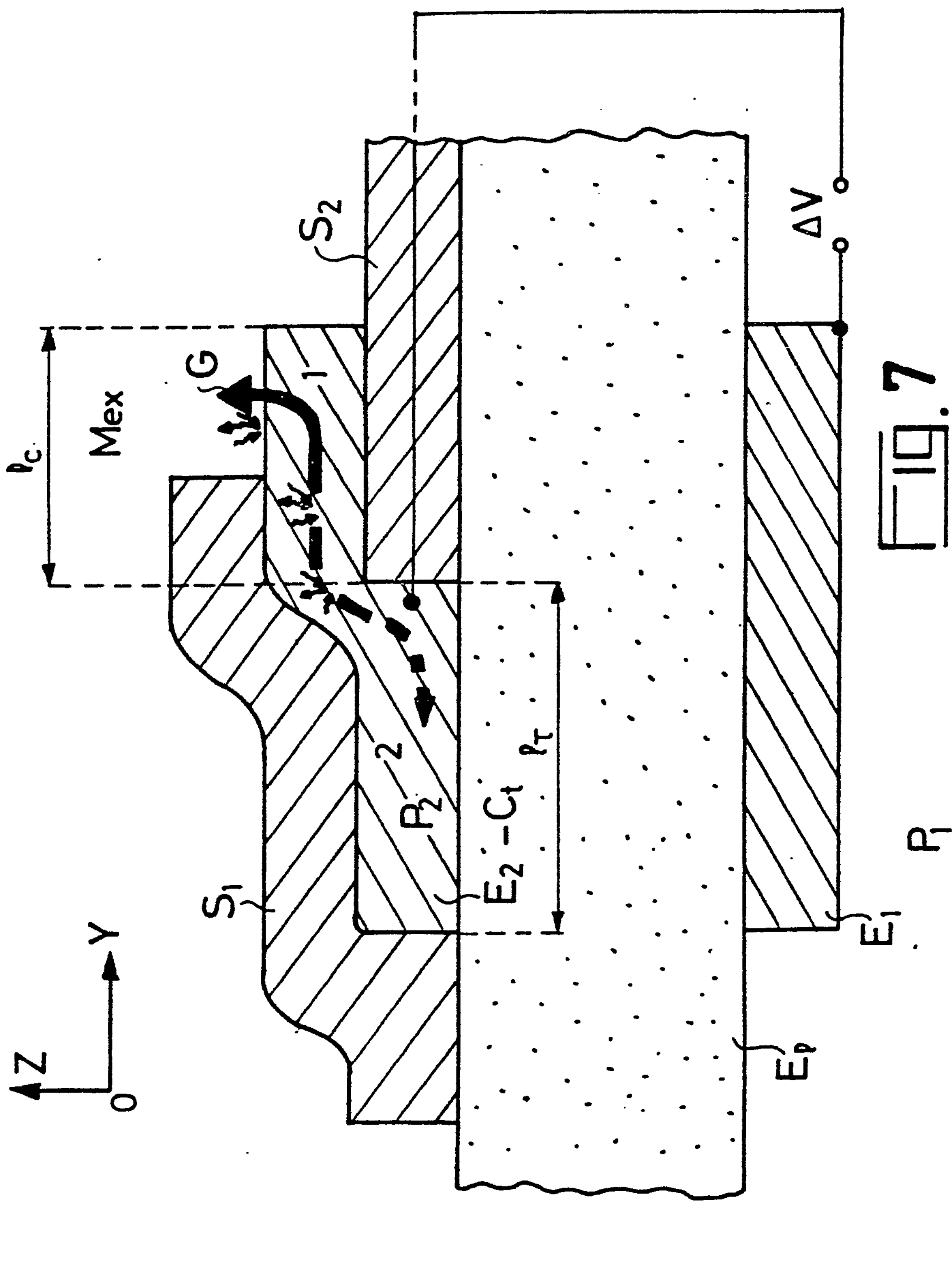


FIG. 7

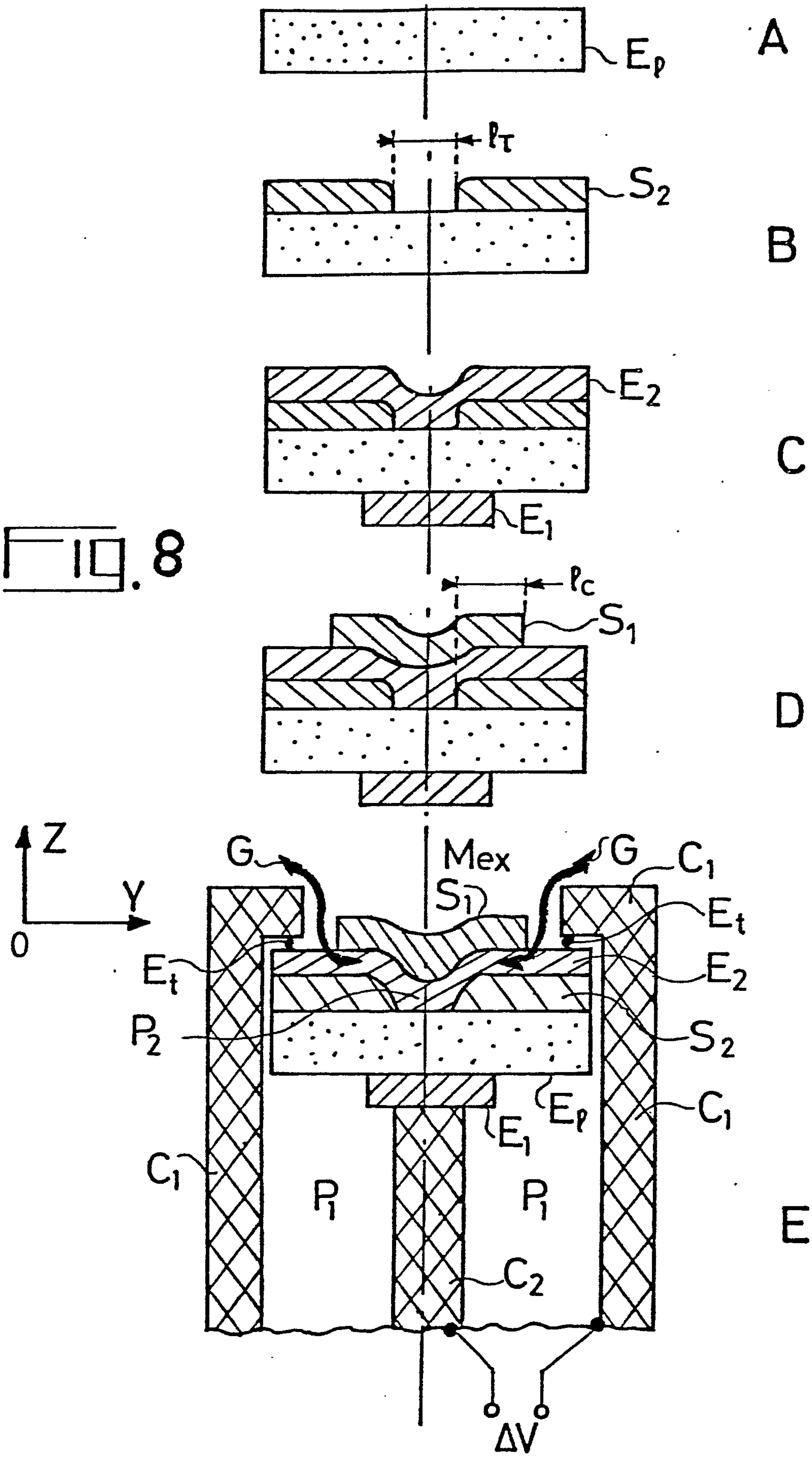
A
$E_\ell$
$\ell_T$
$S_2$
B
$E_2$
C
$E_1$
$\ell_c$
$S_1$
D
Z
Y
0
G
Mex
G
$C_1$
$S_1$
$E_t$
$E_t$
$E_2$
$P_2$
$S_2$
$E_\ell$
$C_1$
$E_1$
$C_1$
$P_1$
$P_1$
E
$C_2$
ΔV

Fig. 8

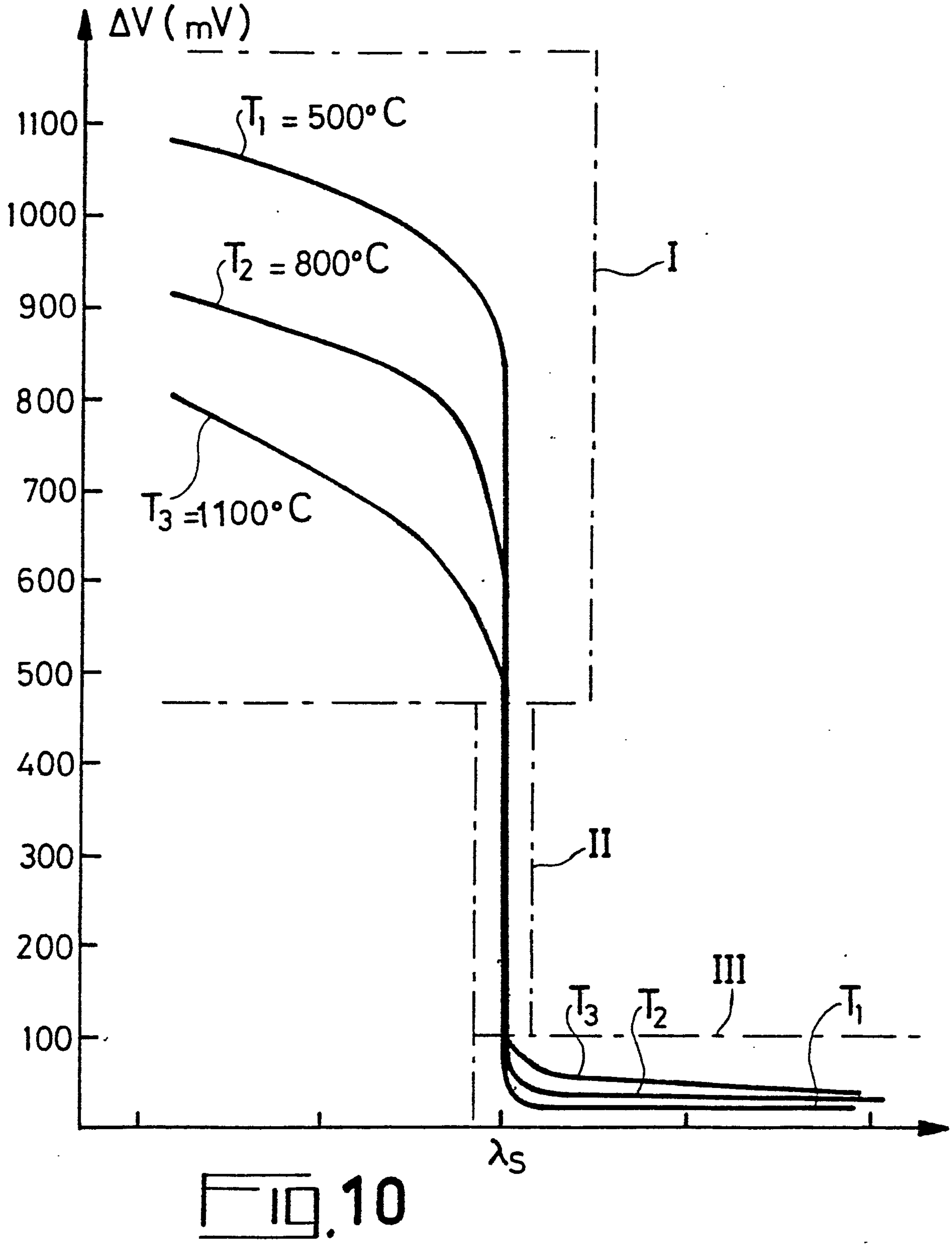
ΔV (mV)
1100
1000
900
800
700
600
500
400
300
200
100
$T_1$ = 500° C
$T_2$ = 800°C
$T_3$ =1100° C
I
II
III
$T_3$
$T_2$
$T_1$
$\lambda_S$

Fig.10

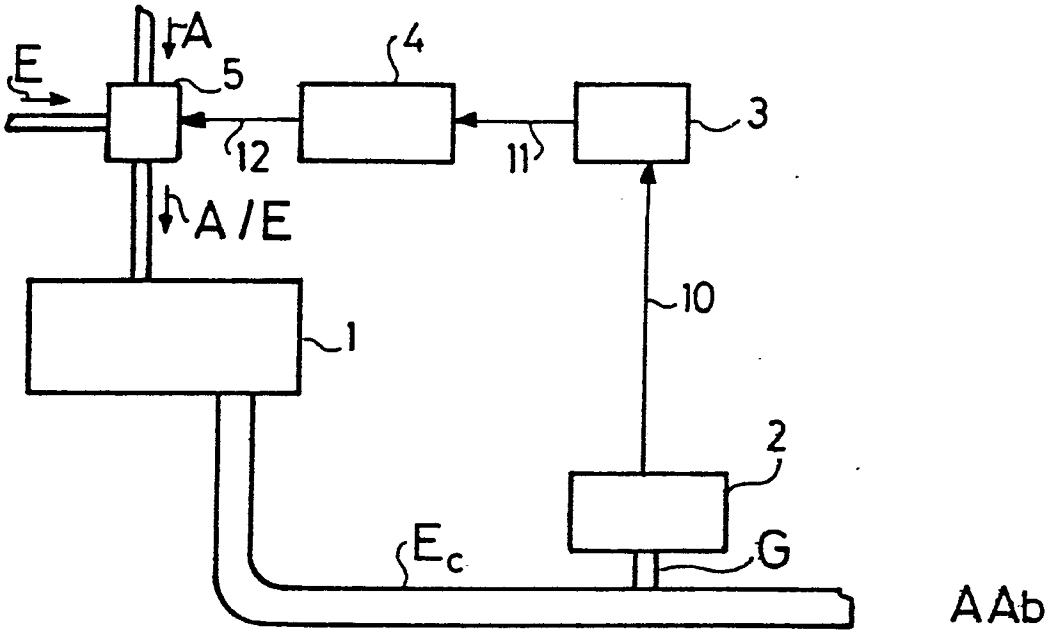
A
E
5
4
3
12
11
A/E
10
1
2
G
Ec
AAb

Fig.11

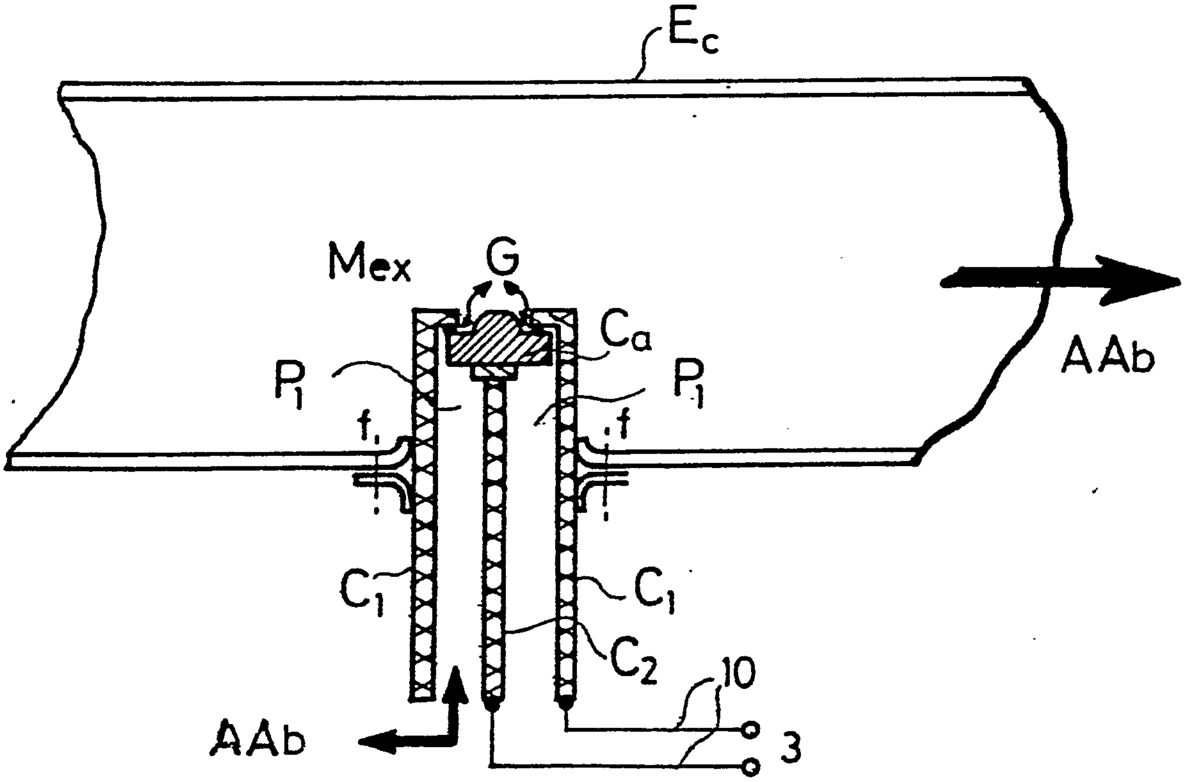
Ec
Mex
G
Ca
AAb
P1
P1
f1
f
C1
C1
C2
10
AAb
3

Fig.12